# EUROPÄISCHE PATENTSCHRIFT

(11) **EP 4 306 799 B1**
(45) Veröffentlichungstag und Bekanntmachung des Hinweises auf die Patenterteilung: **26.02.2025**
(21) Anmeldenummer: 22185015.9
(22) Anmeldetag: 14.07.2022
(51) Int. Cl.: F03D 80/60, F16J 15/447

(54) **LABYRINTHDICHTUNGSVORRICHTUNG FÜR EINEN KÜHLUNGSLUFTDURCHGANG EINES KÜHLUNGSSYSTEMS EINES GENERATORS EINER WINDENERGIEANLAGE**
LABYRINTH SEAL DEVICE FOR THE PASSAGE OF COOLING AIR OF A COOLING SYSTEM OF A WIND TURBINE GENERATOR
DISPOSITIF JOINT D'ÉTANCHÉITÉ À LABYRINTHE POUR UN PASSAGE D'AIR DE REFROIDISSEMENT D'UN SYSTÈME DE REFROIDISSEMENT D'UN GÉNÉRATEUR D'UNE ÉOLIENNE

(43) Veröffentlichungstag der Anmeldung: 17.01.2024
(73) Patentinhaber: Wobben Properties GmbH, 26607 Aurich (DE)
(72) Erfinder: Daboul, Hussam, Südbrookmerland (DE); Busemann, Steffen, 26842 Ostrhauderfehn (DE); Koppe, Malte, Bremen (DE)
(74) Vertreter: Eisenführ Speiser

(56) Entgegenhaltungen:
- CN-A- 101 814 793
- US-A1- 2016 218 575

## Beschreibung

Die Erfindung betrifft eine Labyrinthdichtungsvorrichtung für einen Luftdurchgang für Kühlungsluft eines Kühlungssystems eines Generators einer Windenergieanlage, die Labyrinthdichtungsvorrichtung aufweisend, eine erste Labyrinthdichtungswand und eine beabstandet zu der ersten Labyrinthdichtungswand angeordnete zweite Labyrinthdichtungswand, wobei die erste und die zweite Labyrinthdichtungswand eine labyrinthartig ausgebildete Dichtungsstrecke ausbilden, die ausgebildet ist, den Generator gegenüber Schmutz und/oder Wasser aus einer Umgebung abzudichten und zur Kühlung des Generators die Umgebung des Generators mit einem Generatorinnenraum des Generators strömungstechnisch zu verbinden.

Weiterhin betrifft die Erfindung eine Verwendung einer Labyrinthdichtungsvorrichtung zur strömungsoptimierten Abdichtung eines Luftdurchgangs für Kühlungsluft eines Kühlungssystems für einen Generator einer Windenergieanlage.

Ferner betrifft die Erfindung einen Luftdurchgang, einen Generator und eine Windenergieanlage.

Zur Kühlung eines Generators weist dieser bei Luftkühlung häufig einen oder mehrere Luftdurchgänge als Teil des Kühlungssystems auf. In der Regel weist ein solcher Generator als Luftdurchgang mindestens einen Lufteinlass und mindestens einen Luftauslass auf. Im Betriebszustand wird zur Kühlung des Generators durch den Lufteinlass Luft aus der Umgebung als Kühlungsluft in den Generatorinnenraum geführt. Durch den Luftauslass wird im Betriebszustand zur Kühlung des Generators erwärmte Kühlungsluft aus dem Generatorinnenraum in die Umgebung geführt. Häufig weist das Kühlungssystem einen oder mehrere Ventilatoren auf, welche die Kühlungsluft aus der Umgebung in den Generator hineinfördern, durch den Generator hindurchfördern und die erwärmte Kühlungsluft aus dem Generator in die Umgebung hinausfördern.

Um mit dem Kühlungssystem eine möglichst hohe Kühlungsleistung zu erzielen, ist der Querschnitt der Luftdurchgänge, durch die die Kühlungsluft zur Kühlung des Generators strömt, möglichst groß auszubilden. Dem steht allerdings entgegen, dass der Generatorinnenraum gegenüber der Umgebung derart abgeriegelt sein soll, so dass kein Schmutz, Wasser und sonstige Objekte aus der Umgebung in den Generatorinnenraum gelangen kann, die die Lebensdauer des Generators reduzieren, den Wartungsaufwand erhöhen und möglicherweise einem kontrollierten Betrieb des Generators entgegenstehen.

Zur Abdichtung vor Schmutz, Wasser und dergleichen kommt bei einer stationären Dichtung beispielsweise eine Gummidichtung, etwa ein O-Ring in Betracht. Soll hingegen beispielsweise ein drehendes Bauteil gegenüber einem stationären Bauteil abgedichtet werden, werden häufig Radialwellendichtringe eingesetzt, die eine Abdichtung vor Schmutz, Wasser und dergleichen gewährleisten können. Soll die Dichtung allerdings zusätzlich ermögliche, dass Kühlungsluft die Dichtung passieren kann, sind weder Gummidichtungen wie O-Ringe oder Radialwellendichtringe das geeignete Mittel der Wahl.

Eine Dichtung, die eine Abdichtung vor Schmutz, Wasser und dergleichen ermöglicht und gleichzeitig Kühlungsluft passieren lassen kann, ist eine Labyrinthdichtungsvorrichtung. Eine solche Labyrinthdichtungsvorrichtung kommt nicht nur als Dichtung zwischen zwei feststehenden Bauteilen, sondern auch zur Abdichtung zwischen einem stationären und einem sich drehenden Bauteil zum Einsatz.

Funktionsbedingt ist eine solche Labyrinthdichtungsvorrichtung mehrstufig ausgebildet. Je Stufe greifen Formelemente ineinander (Verkämmung), die den Eintritt von Schmutz, Wasser und dergleichen verhindern. Die Verkämmung hat allerdings den wesentlichen Nachteil, dass sich dadurch der Strömungsweg der Dichtstrecke verlängert und somit der Strömungswiderstand erhöht, was wiederum die Kühlungsleistung minimiert bzw. wesentlich leistungsstärkere Kühlungssysteme, d.h. leistungsstärkere Ventilatoren erforderlich macht.

Diese leistungsstärkeren Kühlungssysteme sind in der Regel teuer in der Anschaffung und im Betrieb und konterkarieren eine kompakte Bauweise von Generatoren.

Ferner sind die Luftdurchgänge vorzugsweise derart anzuordnen, dass die Kühlungsluft mit möglichst geringem Widerstand aus der Umgebung in den Generatorinnenraum hineingeführt, durch den Generatorinnenraum hindurchgeführt und aus dem Generatorinnenraum in die Umgebung abgeführt werden kann. Die bauliche Ausgestaltung von Generatoren, insbesondere deren kompakte bauliche Ausgestaltung, steht einer möglichst widerstandsfreien Führung von Kühlungsluft durch die Luftdurchgänge in aller Regel entgegen. Häufig muss die Kühlungsluft bauraumbedingt um Ecken und Kanten geführt werden. Diese Wechsel der Strömungsrichtung erhöhen ebenfalls den Strömungswiderstand und führen somit zu einer minimierten Kühlungsleistung.

In dem Dokument CN 101814793 A ist eine Windenergieanlage mit einem Generator mit einer Labyrinthdichtungsvorrichtung offenbart.

Es ist daher eine Aufgabe der vorliegenden Erfindung, eine Labyrinthdichtungsvorrichtung sowie deren Verwendung, einen Luftdurchgang, einen Generator und eine Windenergieanlage bereitzustellen, die die vorgenannten Nachteile minimieren oder beheben. Insbesondere liegt der Erfindung die Aufgabe zugrunde, eine Labyrinthdichtungsvorrichtung sowie deren Verwendung, einen Luftdurchgang, einen Generator und eine Windenergieanlage bereitzustellen, die einen Generatorinnenraum eines Generators gegenüber der Umgebung des Generators vor Schmutz, Wasser und dergleichen abdichten und gleichzeitig eine Kühlungsleistung durch ein vergleichsweise leistungsschwaches Kühlungssystem zu ermöglichen oder die Kühlungsleistung bei einem gleichbleibenden Kühlungssystem zu verbessern.

Gemäß einem ersten Aspekt wird diese Aufgabe basierend auf einer eingangs beschriebenen Labyrinthdichtungsvorrichtung gelöst, wobei die Dichtungsstrecke eine Luftleitvorrichtung aufweist, die ausgebildet ist, die Kühlungsluft strömungsoptimiert durch die Dichtungsstrecke zu leiten.

Der Luftdurchgang ist ausgebildet, Kühlungsluft eines Kühlungssystems eines Generators zu führen. Insbesondere ist der Luftdurchgang ausgebildet, die Umgebung des Generators mit dem Generatorinnenraum strömungstechnisch zu verbinden. Der Luftdurchgang ist vorzugsweise ein Luftauslass, durch den Kühlungsluft aus dem Generatorinnenraum in die Umgebung austritt, und/oder ein Lufteinlass, durch den Kühlungsluft aus der Umgebung in den Generatorinnenraum eintritt. Ferner kann bevorzugt sein, dass der Luftdurchgang ausgebildet ist, eine strömungstechnische Verbindung innerhalb des Generatorinnenraums herzustellen.

Der Luftdurchgang erstreckt sich vorzugsweise zwischen zwei Öffnungen, wobei durch eine der beiden Öffnungen Kühlungsluft eintreten kann (Einlassöffnung) und durch die jeweils andere der beiden Öffnungen Kühlungsluft austreten kann (Auslassöffnung). Insbesondere ist vorgesehen, dass eine der beiden Öffnungen, als sogenannte außenliegende Öffnung, den Durchgangskanal im Einbauzustand zu der Umgebung des Generators öffnet. Ferner ist bevorzugt vorgesehen, dass die andere der beiden Öffnungen, als sogenannte innenliegende Öffnung, den Durchgangskanal im Einbauzustand zu dem Generatorinnenraum des Generators öffnet.

Der Luftdurchgang kann insbesondere als Kanal ausgebildet sein. Vorzugsweise ist der Luftdurchgang rohrförmig ausgebildet. Der rohrförmig ausgebildete Luftdurchgang kann insbesondere einen kreisförmigen und/oder einen dreieckigen und/oder viereckigen Querschnitt aufweisen. Insbesondere kann es vorgesehen sein, dass der Luftdurchgang ringsegmentförmig oder teilringsegmentförmig ausgebildet ist.

Sofern der Luftdurchgang ein Lufteinlass ist, ist der Luftdurchgang ausgebildet, Kühlungsluft aus der Umgebung des Generators in den Generator in einen Generatorinnenraum zu führen. Bei dem Lufteinlass wird zur Kühlung des Generators dem Generator Luft aus der Umgebung zugeführt. Es ist zu verstehen, dass in bevorzugten Ausführungsformen des Luftdurchgangs als Lufteinlass, die Luft aus der Umgebung, die dem Generator zur Kühlung durch den Lufteinlass zugeführt wird, gereinigt, beispielsweise gefiltert, und ggf. auf eine gewünschte Kühltemperatur temperiert wird, die einen optimalen Betrieb des Generators ermöglicht.

Ist der Luftdurchgang ein Luftauslass ist, ist der Luftdurchgang ausgebildet, die vom Generator erwärmte Kühlungsluft aus dem Generator, dem Generatorinnenraum, in die Umgebung des Generators zu führen.

Vorzugsweise weist der Luftdurchgang die Labyrinthdichtungsvorrichtung auf. Insbesondere kann vorgesehen sein, dass der Luftdurchgang die Labyrinthdichtungsvorrichtung ausbildet oder der Luftdurchgang abschnittsweise als Labyrinthdichtungsvorrichtung ausgebildet ist. Vorzugsweise ist die Labyrinthdichtungsvorrichtung zwischen den oben genannten beiden Öffnungen, der Einlassöffnung und der Auslassöffnung, insbesondere der innenliegenden und außenliegenden Öffnung, angeordnet oder ausgebildet.

Die Labyrinthdichtungsvorrichtung ist in bevorzugter Weise ausgebildet, Kühlungsluft eines Kühlungssystems zu führen. Insbesondere kann die Labyrinthdichtungsvorrichtung ausgebildet sein, die Umgebung des Generators mit dem Generatorinnenraum strömungstechnisch zu verbinden. Ferner kann bevorzugt sein, dass die Labyrinthdichtungsvorrichtung ausgebildet ist, eine strömungstechnische Verbindung innerhalb des Generatorinnenraums herzustellen. Die Labyrinthdichtungsvorrichtung kann insbesondere als Kanal ausgebildet sein. Vorzugsweise ist die Labyrinthdichtungsvorrichtung rohrförmig ausgebildet. Die rohrförmig ausgebildete Labyrinthdichtungsvorrichtung kann insbesondere einen kreisförmigen und/oder einen dreieckigen und/oder viereckigen Querschnitt aufweisen. Insbesondere kann es in bevorzugter Weise vorgesehen sein, dass die Labyrinthdichtungsvorrichtung ringsegmentförmig oder teilringsegmentförmig ausgebildet ist. Die Labyrinthdichtungsvorrichtung erstreckt sich vorzugsweise zwischen zwei Öffnungen, wobei durch eine der beiden Öffnungen Kühlungsluft eintreten kann, die auch Einlassöffnung genannt werden kann, und durch die jeweils andere der beiden Öffnungen Kühlungsluft austreten kann, die auch Auslassöffnung genannt werden kann.

Ferner kann es bevorzugt sein, dass die Labyrinthdichtungsvorrichtung der Luftdurchgang ist oder diesen ausbildet. Insbesondere ist vorgesehen, dass eine der beiden Öffnungen der Labyrinthdichtungsvorrichtung, die sogenannte außenliegende Öffnung ist, die die Labyrinthdichtungsvorrichtung im Einbauzustand zu der Umgebung des Generators öffnet. Ferner ist bevorzugt vorgesehen, dass die andere der beiden Öffnungen der Labyrinthdichtungsvorrichtung, die sogenannte innenliegende Öffnung ist, die die Labyrinthdichtungsvorrichtung im Einbauzustand zu dem Generatorinnenraum des Generators öffnet.

Die Labyrinthdichtungsvorrichtung weist eine erste und zweite Labyrinthdichtungswand, die beabstandet zueinander angeordnet sind, auf. Insbesondere ist vorgesehen, dass der Abstand zwischen der ersten und zweiten Labyrinthdichtungswand konstant ist. Es kann auch bevorzugt sein, dass der Abstand zwischen der ersten und zweiten Labyrinthdichtungswand in bevorzugten Ausführungsformen auch variieren kann. Vorzugsweise wird eine der beiden Labyrinthdichtungswände durch ein stationäres Bauteil ausgebildet und die andere der beiden Labyrinthdichtungswände durch ein sich drehendes Bauteil ausgebildet. Insbesondere ist vorgesehen, dass das stationäre Bauteil ein Bauteil des Stators ist und das sich drehende Bauteil ein Bauteil des Rotors ist.

Es kann bevorzugt sein, dass die Labyrinthdichtungsvorrichtung mehr als die erste und zweite Labyrinthdichtungswand aufweist. Insbesondere kann vorgesehen sein, dass die Labyrinthdichtungsvorrichtung eine dritte und/oder vierte Labyrinthdichtungswand aufweist. Vorzugsweise sind die dritte und die vierte Labyrinthdichtungswand beabstandet, insbesondere parallel beabstandet zueinander angeordnet. Ferner ist bevorzugt, dass sich die dritte und/oder vierte Labyrinthdichtungswand zwischen der ersten und der zweiten Labyrinthdichtungswand erstreckt/erstrecken.

Vorzugsweise bilden die erste und die zweite und/oder die dritte und/oder die vierte Labyrinthdichtungswand einen Kanal aus. Ferner kann bevorzugt vorgesehen sein, dass die erste und die zweite und/oder die dritte und/oder die vierte Labyrinthdichtungswand rohrförmig ausgebildet sind. Sofern die Labyrinthdichtungsvorrichtung in bevorzugter Weise rohrförmig mit einem kreisförmigen Querschnitt ausgebildet ist, ist zu verstehen, dass die erste und zweite und/oder die dritte und/oder die vierte Labyrinthdichtungswand jeweils einen Rohrwandabschnitt der rohrförmig ausgebildeten Labyrinthdichtungsvorrichtung ausbilden.

Vorzugsweise erstreckt sich die als Rohrwandabschnitt ausgebildete erste und zweite und/oder die dritte und/oder die vierte Labyrinthdichtungswand in Umfangsrichtung um 180°. Davon abweichende Erstreckungen in Umfangsrichtung sind denkbar. Insbesondere kann es bevorzugt sein, dass sich die als Rohrwandabschnitt ausgebildete erste und zweite und/oder die dritte und/oder die vierte Labyrinthdichtungswand in Umfangsrichtung um 60°, 90° oder 120° erstreckt. Insbesondere kann es vorgesehen sein, dass die erste und/oder die zweite und/oder die dritte und/oder die vierte Labyrinthdichtungswand ringförmig oder teilringförmig ausgebildet ist/sind.

Sofern die rohrförmig ausgebildete Labyrinthdichtungsvorrichtung einen dreieckigen Querschnitt aufweist, wird dieser vorzugsweise durch die erste, die zweite und die dritte Labyrinthdichtungswand ausgebildet. Sofern die rohrförmig ausgebildete Labyrinthdichtungsvorrichtung einen viereckigen Querschnitt aufweist, wird dieser vorzugsweise durch die erste, die zweite, die dritte und/oder die vierte Labyrinthdichtungswand ausgebildet.

Die erste und zweite Labyrinthdichtungswand bilden eine labyrinthartig ausgebildete Dichtungsstrecke aus. Insbesondere kann bevorzugt sein, dass mehrere Labyrinthdichtungswände, vorzugsweise die erste und die zweite und/oder die dritte und/oder die vierte Labyrinthdichtungswand die labyrinthartig ausgebildete Dichtungsstrecke ausbilden. Bei einer labyrinthartig ausgebildeten Dichtungsstrecke ist vorgesehen, dass diese einer entlang der Dichtungsstrecke entlangströmenden Kühlungsluft mindestens einen Richtungswechsel aufzwingt. Ein Richtungswechsel liegt insbesondere dann vor, wenn die Strömungsrichtung der Kühlungsluft entlang der Dichtungsstrecke im Vergleich zu der Strömungsrichtung der Kühlungsluft an der Einlassöffnung der Dichtungsstrecke zumindest einmal voneinander abweicht.

Vorzugsweise ist die Dichtungsstrecke derart ausgebildet, dass diese einen Richtungswechsel von mindestens 30°, 45°, 60°, 90°, 135°, 180°, 225° oder 360° vorsieht und/oder mindestens einen Richtungswechsel von 30°, 45°, 60°, 90°, 135°, 180°, 225° oder 360° vorsieht. Insbesondere kann die Dichtungsstrecke derart ausgebildet sein, dass diese einer entlang der Dichtungsstrecke strömenden Kühlungsluft mehrere Richtungswechsel aufzwingt. Insbesondere kann hierfür vorgesehen sein, dass die labyrinthartig ausgebildete Dichtungsstrecke mäanderförmig ausgebildet ist. Vorzugsweise sind die erste und zweite Labyrinthdichtungswand jeweils zahnförmig und/oder kammförmig ausgebildet, so dass sich Zahnspitzen oder Kammspitzen der ersten Labyrinthdichtungswand in Zahntäler oder Kammtäler der zweiten Labyrinthdichtungswand erstrecken und umgekehrt Zahnspitzen oder Kammspitzen der zweiten Labyrinthdichtungswand in Zahntäler oder Kammtäler der ersten Labyrinthdichtungswand erstrecken.

Die Luftleitvorrichtung ist vorzugsweise gekrümmt ausgebildet. Die Luftleitvorrichtung ist insbesondere konvex und/oder konkav ausgebildet. Es kann ergänzend oder alternativ bevorzugt sein, dass die Luftleitvorrichtung gegenüber der Strömungsrichtung der Kühlungsluft geneigt, insbesondere winklig angeordnet ist.

Die Luftleitvorrichtung weist insbesondere eine Anströmkante und/oder eine Abströmkante auf. Vorzugsweise erstreckt sich die Luftleitvorrichtung zwischen der Anströmkante und der Abströmkante. Vorzugsweise ist die Anströmkante jene Kante der Luftleitvorrichtung, welche von der Kühlungsluft angeströmt wird. Die Anströmkante ist insbesondere jene Kante, ab der die Kühlungsluft in Strömungsrichtung erstmalig mit der Luftleitvorrichtung in Kontakt tritt. Die Abströmkante ist insbesondere jene Kante der Luftleitvorrichtung, an der die Kühlungsluft abströmt. Die Abströmkante ist vorzugsweise jene Kante, an der der Luftstrom der Kühlungsluft abreißt, die Kühlungsluft nicht mehr mit der Luftleitvorrichtung in strömungstechnisch Kontakt steht. Es ist zu verstehen, dass die Anströmkante in Strömungsrichtung stromaufwärts zu der Abströmkante angeordnet ist.

Vorzugsweise ist die Luftleitvorrichtung ausgehend von der Anströmkante konkavförmig und/oder konvexförmig ausgebildet. Ergänzend oder alternativ ist die Luftleitvorrichtung bis zu der Abströmkante konkavförmig und/oder konvexförmig ausgebildet. Vorzugsweise erstreckt sich die Luftleitvorrichtung zwischen der Anströmkante und der Abströmkante im Einbauzustand entlang der Dichtungsstrecke. Insbesondere ist vorgesehen, dass die Luftleitvorrichtung zwischen der Anströmkante und der Abströmkante konkavförmig und/oder konvexförmig ausgebildet ist. Insbesondere weist die Luftleitvorrichtung konkave Luftleitabschnitte und/oder Konvexe Luftleitabschnitte auf. Insbesondere kann die Luftleitvorrichtung eine Krümmung aufweisen, die entlang der Dichtungsstrecke konstant ist. Alternativ kann die Luftleitvorrichtung eine Krümmung aufweisen, die entlang der Dichtungsstrecke variiert. Insbesondere weist die Luftleitvorrichtung zwischen der Anströmkante und der Abströmkante einen Abschnitt konstanter Krümmung auf. Ergänzend oder alternativ weist die Luftleitvorrichtung zwischen der Anströmkante und der Abströmkante einen Abschnitt variierender Krümmung auf.

Die Erfindung beruht nun auf der Erkenntnis, dass sich mit der Luftleitvorrichtung, die Kühlungsluft, strömungsoptimiert entlang der Dichtungsstrecke führen lässt. Die Erfinder haben erkannt, dass sich der Strömungswiderstand der Dichtungsstrecke minimieren lässt, in dem eine Luftleitvorrichtung vorgesehen wird. Dies hat den Vorteil, dass die Kühlungsluft zur Kühlung des Generators zugeführt und/oder durchgeführt und/oder abgeführt werden kann. Hierdurch wird der Generator bei gleichbleibender Kühlungsleistung des Kühlungssystems wesentlich besser gekühlt. Dies erhöht die Lebensdauer von Generatoren erheblich.

Insbesondere kann bei einer derart optimierten Dichtungsstrecke in vorteilhafter Weise auch ein leistungsschwächeres Kühlungssystem vorgesehen werden, mit dem sich dieselbe Kühlungswirkung des Generators erzielen lässt. Hierdurch können Kosten in der Anschaffung und im Betrieb minimiert werden. Ferner lassen sich hierdurch Generatoren kompakter ausgestalten. Dies erleichtert die Handhabung solcher Generatoren während der Montage und Wartung.

Zu den Vorteilen, Ausführungsvarianten und Ausführungsdetails dieses Aspekts der Erfindung und ihrer Fortbildungen wird auch auf die nachfolgende Beschreibung zu den entsprechenden Merkmalen der jeweiligen anderen Aspekte und deren Fortbildungen verwiesen.

Es ist vorgesehen, dass die Luftleitvorrichtung innerhalb der Dichtungsstrecke, beabstandet zu der ersten und zweiten Labyrinthdichtungswand, angeordnet ist. Insbesondere ist bevorzugt, dass die Luftleitvorrichtung zu der ersten und zweiten Labyrinthdichtungswand äquidistant beabstandet angeordnet ist. Ferner kann es ergänzend bevorzugt sein, dass die Luftleitvorrichtung insbesondere beabstandet zu der dritten und/oder vierten Labyrinthdichtungswand, angeordnet ist. Insbesondere ist bevorzugt, dass die Luftleitvorrichtung zu der dritten und vierten Labyrinthdichtungswand äquidistant beabstandet angeordnet ist. Diese bevorzugte Ausführungsform hat insbesondere den Vorteil, dass der Druckverlust im Vergleich zu anderen Varianten nochmal vergleichsweise geringer ausfällt.

Es ist gemäß einer bevorzugten Ausführungsform der Labyrinthdichtungsvorrichtung vorgesehen, dass die Luftleitvorrichtung an der ersten und/oder zweiten Labyrinthdichtungswand ausgebildet ist oder die erste und/oder die zweite Labyrinthdichtungswand ausbildet. Ferner kann ergänzend oder alternativ in bevorzugter Weise vorgesehen sein, dass die Luftleitvorrichtung an der dritten und/oder vierten Labyrinthdichtungswand ausgebildet ist oder die dritte und/oder die vierte Labyrinthdichtungswand ausbildet. Diese bevorzugte Ausführungsform hat insbesondere den Vorteil, dass sie sich im Vergleich zu anderen Varianten weniger komplex und daher nochmals einfacher fertigen lässt.

Weiterhin ist nach einer bevorzugten Fortbildung der Labyrinthdichtungsvorrichtung vorgesehen, dass die Luftleitvorrichtung mindestens ein Luftleitelement aufweist. Das mindestens eine Luftleitelement ist insbesondere ein Luftleitblech.

Das mindestens eine Luftleitelement ist vorzugsweise gekrümmt ausgebildet. Das mindestens eine Luftleitelement ist insbesondere konvex und/oder konkav ausgebildet. Es kann ergänzend oder alternativ bevorzugt sein, dass das mindestens eine Luftleitelement gegenüber der Strömungsrichtung der Kühlungsluft geneigt, insbesondere winklig angeordnet ist.

Vorzugsweise ist das mindestens eine Luftleitelement ausgehend von der Anströmkante konkavförmig und/oder konvexförmig ausgebildet. Ergänzend oder alternativ ist das mindestens eine Luftleitelement bis zu der Abströmkante konkavförmig und/oder konvexförmig ausgebildet. Vorzugsweise erstreckt sich das mindestens eine Luftleitelement zwischen der Anströmkante und der Abströmkante im Einbauzustand entlang der Dichtungsstrecke. Insbesondere ist vorgesehen, dass das mindestens eine Luftleitelement zwischen der Anströmkante und der Abströmkante konkavförmig und/oder konvexförmig ausgebildet ist.

Insbesondere weist das mindestens eine Luftleitelement konkave Luftleitabschnitt und/oder Konvexe Luftleitabschnitte auf. Insbesondere kann das mindestens eine Luftleitelement eine Krümmung aufweisen, die entlang der Dichtungsstrecke konstant ist. Alternativ kann das mindestens eine Luftleitelement eine Krümmung aufweisen, die entlang der Dichtungsstrecke variiert. Insbesondere weist das mindestens eine Luftleitelement zwischen der Anströmkante und der Abströmkante einen Abschnitt konstanter Krümmung auf. Ergänzend oder alternativ weist das mindestens eine Luftleitelement zwischen der Anströmkante und der Abströmkante einen Abschnitt variierender Krümmung auf.

Insbesondere weist die Luftleitvorrichtung zwei, drei oder mehr Luftleitelemente auf. Vorzugsweise sind die Luftleitelemente mit einem Abstand zueinander angeordnet, der im Wesentlichen dem Abstand der Luftleitelemente zu der ersten und/oder zweiten Labyrinthdichtungswand entspricht. Ferner kann bevorzugt sein, dass die zwei oder mehreren Luftleitelemente derart angeordnet sind, dass diese sich schneiden. Vorzugsweise ist vorgesehen, dass die zwei Luftleitelemente kreuzförmig angeordnet sind. Insbesondere kann vorgesehen sein, dass ein, zwei oder mehrere Luftleitelemente sich entlang einer ersten Erstreckungsrichtung, beispielsweise in einer vertikalen Richtung, erstrecken und eins, zwei oder mehrere Luftleitelemente sich entlang einer zweiten Erstreckungsrichtung, beispielsweise in einer horizontalen Richtung, die von der ersten Erstreckungsrichtung verschieden ist, erstrecken. Insbesondere kann bevorzugt sein, dass das mindestens eine Luftleitelemente kreuzförmig ausgebildet ist.

Es kann bevorzugt sein, dass sich ein oder mehrere Luftleitelemente zwischen der ersten und zweiten Labyrinthdichtungswand erstrecken. Vorzugsweise erstrecken sich das eine oder die mehreren Luftleitelemente beabstandet zu der dritten und/oder vierten Labyrinthdichtungswand. Insbesondere kann bevorzugt sein, dass sich das eine oder die mehreren Luftleitelemente parallel zu der dritten und/oder der vierten Labyrinthdichtungswand erstrecken.

Ergänzend oder alternativ kann vorgesehen sein, dass sich ein oder mehrere Luftleitelemente zwischen der dritten und vierten Labyrinthdichtungswand erstrecken. Vorzugsweise erstrecken sich das eine oder die mehreren Luftleitelemente beabstandet zu der ersten und/oder zweiten Labyrinthdichtungswand. Insbesondere kann bevorzugt sein, dass sich das eine oder die mehreren Luftleitelemente parallel zu der ersten und/oder der zweiten Labyrinthdichtungswand erstrecken.

Diese Anordnung hat den Vorteil, dass sich die Strömung der Kühlungsluft innerhalb der Dichtungsstrecke strömungsoptimal einstellen lässt.

Ferner ist gemäß einer bevorzugten Fortbildung der Labyrinthdichtungsvorrichtung vorgesehen, dass die Luftleitvorrichtung mindestens zwei Luftleitelemente aufweist, wobei die mindestens zwei Luftleitelemente in Strömungsrichtung der Kühlungsluft hintereinander und/oder nebeneinander angeordnet sind.

Diese Anordnung hat den Vorteil, dass sich die Strömung der Kühlungsluft innerhalb der Dichtungsstrecke strömungsoptimal einstellen lässt.

Nach einer weiteren bevorzugten Ausführungsform der Labyrinthdichtungsvorrichtung ist vorgesehen, dass das mindestens eine Luftleitelement gekrümmt ausgebildet ist und/oder das mindestens eine Luftleitelement gegenüber der Strömungsrichtung geneigt, insbesondere winklig angeordnet ist.

Gemäß einer ferner bevorzugten Fortbildung der Labyrinthdichtungsvorrichtung ist vorgesehen, dass das mindestens eine Luftleitelement als Teilringsegment ausgebildet ist, das sich vorzugsweise um etwa 90° oder 180° erstreckt, und/oder als ebenes Element ausgebildet ist.

Weiterhin ist in einer bevorzugten Ausführungsform der Labyrinthdichtungsvorrichtung vorgesehen, dass die labyrinthartige Dichtungsstrecke mindestens einen Umlenkungsbereich aufweist, der ausgebildet ist, die Kühlungsluft derart zu führen, dass der mindestens eine Umlenkungsbereich eine Änderung der Strömungsrichtung der Kühlungsluft bedingt.

Ein Umlenkungsbereich ist insbesondere dadurch ausgebildet, dass in dem Umlenkungsbereich eine Änderung der Strömungsrichtung hervorgerufen wird. Insbesondere ist vorgesehen, dass in dem mindestens einen Umlenkungsbereich eine Änderung der Strömungsrichtung um eine Umlenkachse erfolgt. Eine Umlenkachse ist hierbei nicht als physische Achse, sondern als virtuelle Achse zu verstehen, in Bezug zu der die Strömungsrichtung der Kühlungsluft variieren kann.

Vorzugsweise ist vorgesehen, dass die Dichtungsstrecke mehrere Umlenkbereiche aufweist. Insbesondere kann bevorzugt sein, dass die mehreren Umlenkbereiche jeweils eine Änderung der Strömungsrichtung um eine Umlenkachse bedingen, wobei die Umlenkachsen der mehreren Umlenkbereich sich parallel beabstandet zueinander erstrecken. Ferner kann es bevorzugt sein, dass mehrere Umlenkbereiche eine Änderung der Strömungsrichtung um eine Umlenkachse bedingen, wobei mindestens ein Umlenkbereich eine Änderung der Strömungsrichtung um eine Umlenkachse bedingt, wobei dessen Umlenkachse gegenüber der Umlenkachse von mindestens einer Umlenkachse eines anderen Umlenkbereichs gedreht ausgerichtet ist. Vorzugsweise weist die Dichtungsstrecke beispielsweise einen ersten Umlenkbereich auf, der eine Änderung der Strömungsrichtung um eine vertikale Umlenkachse bedingt, und einen zweiten Umlenkbereich auf, der eine Änderung der Strömungsrichtung um eine horizontale Umlenkachse bedingt, so dass die horizontale Umlenkachse gegenüber der vertikalen Umlenkachse um 90° gedreht ausgerichtet ist.

Ferner ist nach einer bevorzugten Fortbildung der Labyrinthdichtungsvorrichtung vorgesehen, dass die mindestens zwei Umlenkungsbereiche ausgebildet sind, eine Änderung der Strömungsrichtung von mindestens 90°, vorzugsweise von mindestens 180° zu bewirken, wobei die mindestens zwei Umlenkungsbereiche in Strömungsrichtung in Reihe angeordnet sind.

Gemäß einer weiteren bevorzugten Ausführungsform der Labyrinthdichtungsvorrichtung ist vorgesehen, dass in einem Umlenkungsbereich angeordnete Luftleitelemente, insbesondere mindestens zwei orthogonal zur Strömungsrichtung nebeneinander angeordnete Luftleitelemente und/oder mindestens zwei in Strömungsrichtung hintereinander angeordnete Luftleitelemente eine Luftleiteinheit ausbilden.

Weiterhin ist nach einer bevorzugten Fortbildung der Labyrinthdichtungsvorrichtung vorgesehen, dass in mindestens einem oder in allen Umlenkungsbereichen mindestens ein Leitelement und/oder eine Luftleiteinheit angeordnet sind/ist.

Nach einer weiteren bevorzugten Ausführungsform der Labyrinthdichtungsvorrichtung ist vorgesehen, dass die erste Labyrinthdichtungswand und die zweite Labyrinthdichtungswand in Bezug zueinander stationär angeordnet sind.

Alternativ ist in einer bevorzugten Ausführungsform vorgesehen, dass die erste Labyrinthdichtungswand und die zweite Labyrinthdichtungswand in Bezug zueinander beweglich angeordnet sind, wobei die erste Labyrinthdichtungswand stationär und die zweite Labyrinthdichtungswand beweglich angeordnet sind, oder die erste Labyrinthdichtungswand beweglich und die zweite Labyrinthdichtungswand stationär angeordnet sind, oder die erste Labyrinthdichtungswand beweglich und die zweite Labyrinthdichtungswand beweglich angeordnet sind.

Ferner ist gemäß einer bevorzugten Fortbildung der Labyrinthdichtungsvorrichtung vorgesehen, dass die erste Labyrinthdichtungswand von einem Generatorgehäuse und/oder Gondelgehäuse und/oder Maschinengehäuse und/oder einem Spinner ausgebildet wird.

Ergänzend oder alternativ ist in einer bevorzugten Fortbildung der Labyrinthdichtungsvorrichtung vorgesehen, dass die zweite Labyrinthdichtungswand von einem Generatorgehäuse und/oder Gondelgehäuse und/oder Maschinengehäuse und/oder einem Spinner ausgebildet wird.

Ergänzend oder alternativ ist in einer bevorzugten Fortbildung der Labyrinthdichtungsvorrichtung vorgesehen, dass die Dichtungsstrecke eine konstante Querschnittsfläche aufweist, wobei sich die Querschnittsfläche der Dichtungsstrecke vorzugsweise in Strömungsrichtung nicht verändert, insbesondere nicht zunimmt und/oder nicht abnimmt.

Gemäß einem weiteren Aspekt wird diese Aufgabe gelöst basierend auf einem eingangs beschriebenen Luftdurchgang aufweisend eine Labyrinthdichtungsvorrichtung gemäß dem zuvor beschriebenen Aspekt und/oder der zuvor beschriebenen bevorzugten Ausführungsformen davon.

Gemäß einem weiteren Aspekt wird diese Aufgabe gelöst basierend auf einem eingangs beschriebenen Generator aufweisend eine Labyrinthdichtungsvorrichtung und/oder einen Luftdurchgang gemäß einem und/oder beider zuvor beschriebenen Aspekte und/oder der bevorzugten Ausführungsformen der jeweiligen Aspekte.

Gemäß einem weiteren Aspekt wird diese Aufgabe gelöst basierend auf einem eingangs beschriebenen Generator aufweisend eine Labyrinthdichtungsvorrichtung und/oder einen Luftdurchgang und/oder Generator gemäß einem und/oder aller zuvor beschriebenen Aspekte und/oder der bevorzugten Ausführungsformen der jeweiligen Aspekte.

Gemäß einem weiteren Aspekt wird diese Aufgabe gelöst durch eine Verwendung einer Labyrinthdichtungsvorrichtung gemäß dem zuvor beschriebenen Aspekt und/oder der zuvor beschriebenen bevorzugten Ausführungsformen davon zur strömungsoptimierten Abdichtung eines Luftdurchgangs für Kühlungsluft eines Kühlungssystems für einen Generator einer Windenergieanlage.

Zu den Vorteilen, Ausführungsvarianten und Ausführungsdetails dieser weiteren Aspekte der Erfindung und ihrer Fortbildungen wird auch auf die vorangegangene Beschreibung zu den entsprechenden Merkmalen der Labyrinthdichtungsvorrichtung bzw. der jeweiligen anderen Aspekte verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine schematische, dreidimensionale Ansicht einer beispielhaften Ausführungsform einer Windenergieanlage;
- Fig. 2: eine schematische, Schnittansicht einer ersten bevorzugten Ausführungsform einer Labyrinthdichtungsvorrichtung;
- Fig. 3: eine schematische, Schnittansicht einer weiteren bevorzugten Ausführungsform einer Labyrinthdichtungsvorrichtung;
- Fig. 4: eine schematische, Schnittansicht einer weiteren bevorzugten Ausführungsform einer Labyrinthdichtungsvorrichtung;
- Fig. 5: eine schematische, Schnittansicht einer nicht beanspruchten Ausführungsform einer Labyrinthdichtungsvorrichtung; und
- Fig. 6: eine schematische, dreidimensionale Ansicht einer beispielhaften Ausführungsform.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

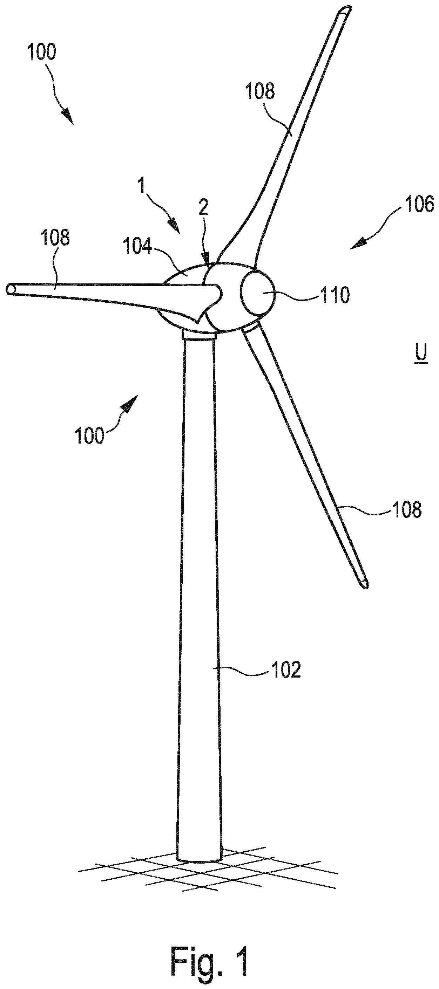

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage als solche schematisch, sodass der Generator, der Luftdurchgang und die Labyrinthdichtungsvorrichtung im Detail nicht erkennbar sind.

Figur 1 zeigt eine schematische, dreidimensionale Ansicht einer Windenergieanlage 100. Die Windenergieanlage 100 weist einen Turm 102 und eine Gondel 104 auf dem Turm 102 auf. Der Turm 102 kann hierbei aus aneinander angeordneten Turmsegmenten bestehen. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind W in eine Drehbewegung versetzt und dreht somit auch einen elektrodynamischen Rotor oder Läufer eines Generators 1, welcher direkt oder indirekt mit dem aerodynamischen Rotor 106 gekoppelt ist. Der Generator 1 ist in der Gondel 104 angeordnet und erzeugt elektrische Energie.

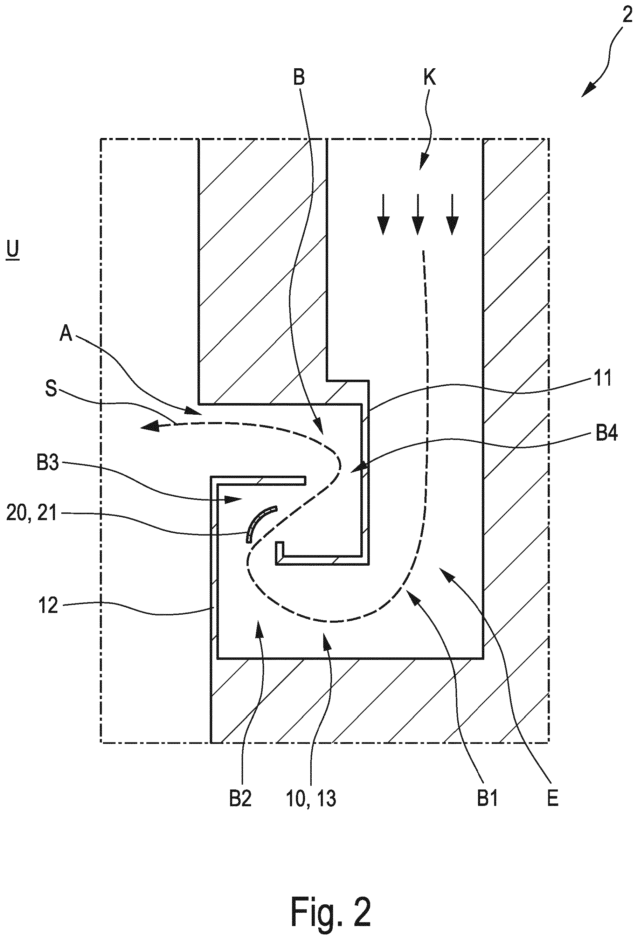

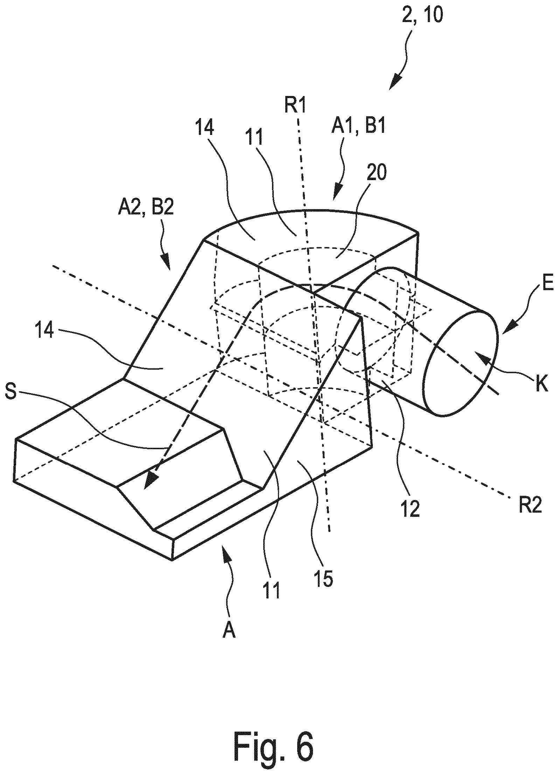

Die Figuren 2 bis 6 zeigen Luftdurchgänge 2 eines Generators 1 mit verschiedenen Ausführungsformen einer Labyrinthdichtungsvorrichtung 10. In den Figuren 2 bis 5 ist der Luftdurchgang 2 als Luftauslass ausgebildet. In Figur 6 ist der Luftdurchgang 2 als Lufteinlass ausgebildet.

In den Figuren 2 bis 6 ist zu erkennen, dass durch den Luftdurchgang 2 und entsprechend durch die Labyrinthdichtungsvorrichtung 10 der jeweiligen Ausführungsform Kühlungsluft K eines Kühlungssystems geführt wird. In den Figuren 2 bis 5 ist zu verstehen, dass vom Generator erwärmte Kühlungsluft K durch den Luftauslass bzw. die Labyrinthdichtungsvorrichtung 10 durch eine Einlassöffnung E aus dem Generatorinnenraum und durch eine Auslassöffnung A in die Umgebung U geführt wird, um eine Kühlung des Generators 1 zu gewährleisten, so dass Kühlungsluft K aus der Umgebung U über einen Lufteinlass zur Kühlung des Generators 1 entsprechend nachströmen kann. Dies ist in dem in Figur 6 dargestellten Ausführungsbeispiel gezeigt: Dort ist ein Lufteinlass abgebildet, durch den Kühlungsluft K aus der Umgebung U zur Kühlung des Generators 1 in den Generatorinnenraum geführt wird. Den Figuren 2 bis 6 ist insofern zu entnehmen, dass die Labyrinthdichtungsvorrichtung 10 zur Kühlung des Generators 1 die Umgebung U des Generators 1 mit einem Generatorinnenraum des Generators 1 strömungstechnisch verbindet.

Die in den Figuren 2 bis 5 schematisch dargestellten Ausführungsformen von Labyrinthdichtungsvorrichtungen 10 weisen jeweils eine erste und zweite Labyrinthdichtungswand 11, 12 auf. Die erste und zweite Labyrinthdichtungswand 11, 12 sind beabstandet zueinander angeordnet, so dass Kühlungsluft K zwischen der ersten und zweiten Labyrinthdichtungswand 11, 12 hindurchgeführt werden kann. Die erste und zweite Labyrinthdichtungswand 11, 12 sind derart zueinander angeordnet, dass diese eine labyrinthartig ausgebildete Dichtungsstrecke 13 ausbilden. In den Ausführungsformen ist vorgesehen, dass die erste Labyrinthdichtungswand 11 ein stehendes Bauteil ist und die zweite Labyrinthdichtungswand 12 ein sich drehendes Bauteil ist. Die labyrinthartige Ausbildung der Dichtungsstrecke 13 ermöglicht, dass der Generator 1 gegenüber Schmutz und/oder Wasser aus der Umgebung U abgedichtet ist. Die labyrinthartig ausgebildeten Dichtungsstrecken 13 der in den Figuren 2 bis 5 schematisch dargestellten Ausführungsformen der Labyrinthdichtungsvorrichtungen 10 sind dadurch gekennzeichnet, dass diese zumindest eine Änderung der Strömungsrichtung der Kühlungsluft K bedingen.

Es ist zu verstehen, dass die labyrinthartig ausgebildete Dichtungsstrecke 13 nicht absolut luftdicht ist, sondern zur Kühlung des Generators 1 die Umgebung U des Generators 1 mit einem Generatorinnenraum des Generators 1 strömungstechnisch verbindet. Die zumindest eine Änderung der Strömungsrichtung der Kühlungsluft K bedingt allerdings, dass der Generator 1 gegenüber Schmutz und/oder Wasser aus der Umgebung U abgedichtet ist.

Um den Generator trotz der labyrinthartig ausgebildeten Dichtungsstrecke 13 möglichst effizient mit Kühlungsluft K zu kühlen, weist die Dichtungsstrecke 13 eine Luftleitvorrichtung 20 auf, die ausgebildet ist, die Kühlungsluft K strömungsoptimiert durch die Dichtungsstrecke 13 zu leiten. In den Figuren 2 bis 6 sind verschiedene Ausführungsformen der Labyrinthdichtungsvorrichtung 10 dargestellt, welche eine strömungsoptimierte Führung der Kühlungsluft K durch die Dichtungsstrecke 13 von der Einlassöffnung E bis zur Auslassöffnung A ermöglichen.

Die Figuren 2 bis 4 zeigen bevorzugte Labyrinthdichtungsvorrichtungen 10 bei denen die Luftleitvorrichtung 20 innerhalb der Dichtungsstrecke 13, beabstandet zu der ersten und zweiten Labyrinthdichtungswand 11, 12 angeordnet ist. Es ist vorgesehen, dass die Kühlungsluft K durch die Einlassöffnung E in die Labyrinthdichtungsvorrichtung 10 eintritt. Es ist zu erkennen, dass die erste Labyrinthdichtungswand 11 im Bereich der Einlassöffnung E einen ersten Umlenkungsbereich B1 aufweist. In dem ersten Umlenkungsbereich erzwingt die Dichtungsstrecke 13 eine Änderung der Strömungsrichtung S der Kühlungsluft K um etwa 90° um eine erste Umlenkungsachse. Stromabwärts des ersten Umlenkungsbereichs, in einem zweiten Umlenkungsbereich B2, erzwingt die Dichtungsstrecke 13 eine weitere Änderung der Strömungsrichtung S der Kühlungsluft K um etwa 90° um eine zweite Umlenkungsachse. In einem dritten Umlenkungsbereich B3 wird eine Umlenkung der Kühlungsluft K um 45° bis 90° um eine dritte Umlenkachse bedingt. In einem vierten Umlenkbereich B4, der sich zwischen dem dritten Umlenkbereich und der Auslassöffnung A erstreckt, wird die Strömungsrichtung der Kühlungsluft um eine vierte Umlenkachse zwischen 270° bis 360° umgelenkt. Es ist zu verstehen, dass die erste, zweite, dritte und vierte Umlenkachse sich im Wesentlichen parallel beabstandet zueinander erstrecken.

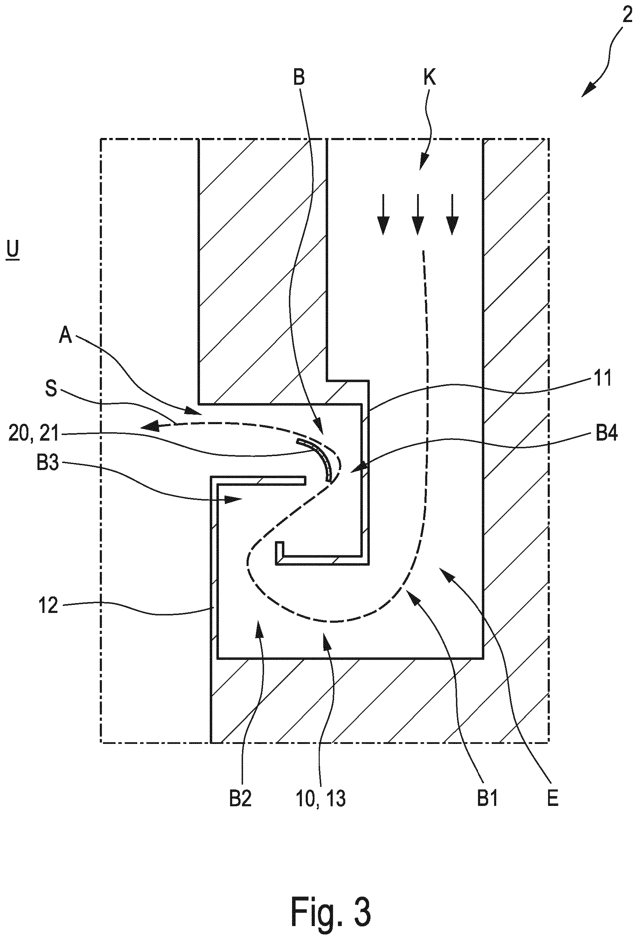

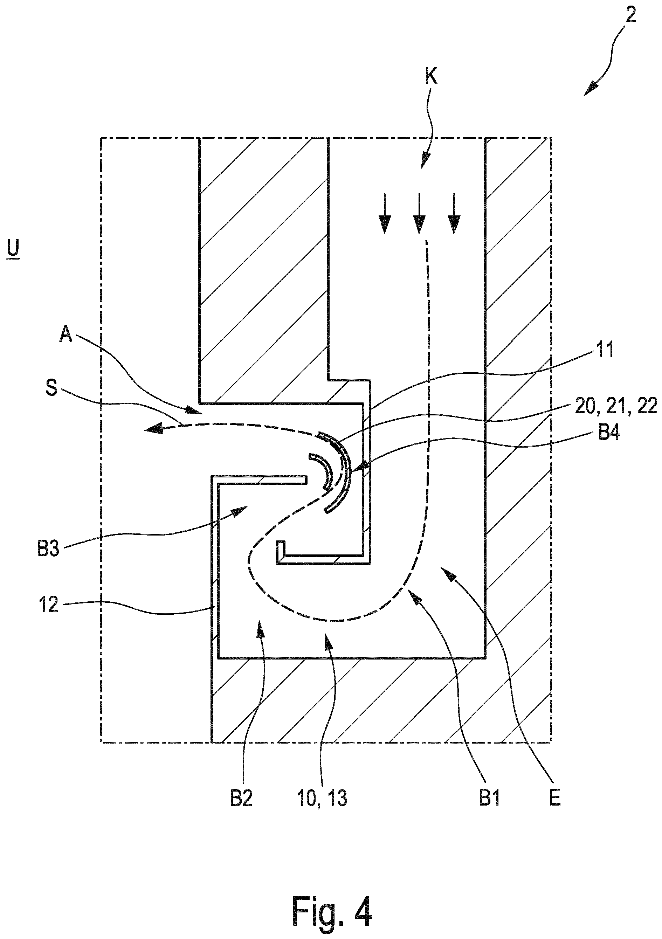

Die in den Figuren 2 bis 4 gezeigten bevorzugten Ausführungsformen der Labyrinthdichtungsvorrichtungen 10 unterscheiden sich im Wesentlichen in der Anordnung und der Ausbildung der Luftleitvorrichtung 20. In der in Figur 2 dargestellten Ausführungsform ist für eine strömungsoptimierte Führung der Kühlungsluft K eine Anordnung der Luftleitvorrichtung 20 in dem dritten Umlenkungsbereich vorgesehen. Die Luftleitvorrichtung 20 weist ein gekrümmtes Luftleitelement 21 auf, welches als Luftleitblech ausgebildet ist, und die Kühlungsluft strömungsoptimiert um 90° um eine dritte Umlenkachse umlenkt. In der in Figur 3 dargestellten Ausführungsform ist für eine strömungsoptimierte Führung der Kühlungsluft K eine Anordnung der Luftleitvorrichtung 20 in dem vierten Umlenkungsbereich B4 vorgesehen. Die Luftleitvorrichtung 20 weist ein gekrümmtes Luftleitelement 21 auf, welches als Luftleitblech ausgebildet ist, und die Kühlungsluft strömungsoptimiert um 90° um eine vierte Umlenkachse umlenkt. Die in Figur 4 dargestellte Ausführungsform basiert auf der in Figur 3 dargestellten Ausführungsform der Labyrinthdichtungsvorrichtungen 10. Die in Figur 4 dargestellte Ausführungsform unterscheidet sich von der in Figur 3 dargestellten Ausführungsform lediglich darin, dass die Luftleitvorrichtung 20 zwei parallel beabstandet zueinander angeordnete Luftleitelemente aufweist, die die Kühlungsluft strömungsoptimiert um 180° um eine vierte Umlenkachse umlenken. Indem die beiden Luftleitelemente 21 in Strömungsrichtung S nebeneinander angeordnet sind, wird eine besonders strömungsoptimierte Führung der Kühlungsluft K ermöglicht.

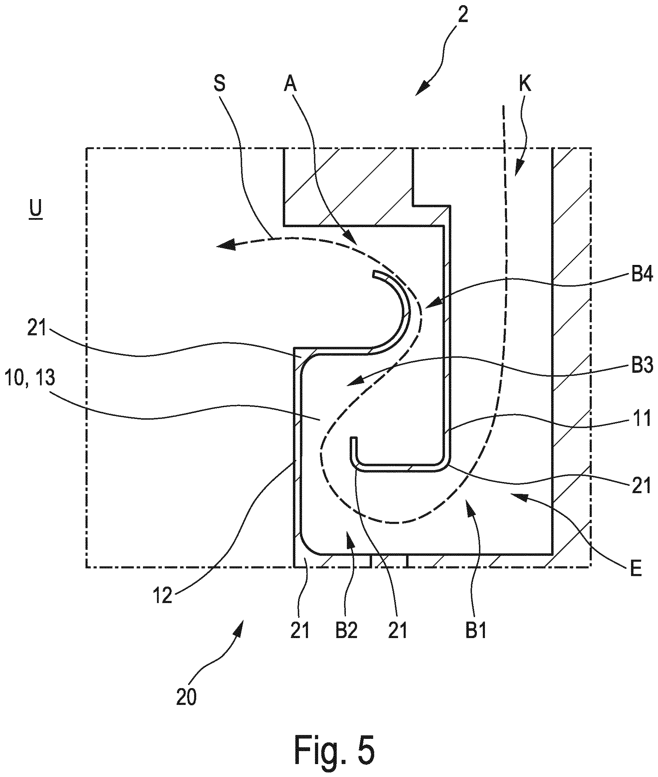

Figur 5 zeigt eine nicht beanspruchte Labyrinthdichtungsvorrichtung 10, bei der die Luftleitvorrichtung 20 an der ersten und zweiten Labyrinthdichtungswand 11, 12 ausgebildet ist. Ferner ist in dieser Ausführungsform vorgesehen, dass die vorgesehen, dass die Luftleitvorrichtung 20 mehrere Luftleitelemente 21 aufweist, die in Strömungsrichtung S hintereinander angeordnet sind.

Es ist zu erkennen, dass die erste Labyrinthdichtungswand 11 im Bereich der Einlassöffnung E in einem ersten Umlenkungsbereich B1 einen Wandabschnitt mit einer Krümmung ausbildet, welcher ein strömungsoptimiertes Einströmen der Kühlungsluft K in die Dichtungsstrecke 13 ermöglicht. Der Wandabschnitt der ersten Labyrinthdichtungswand 11 folgt im Bereich der Einlassöffnung E einem Verlauf eines Viertelkreises. In Bezug zu dem Einlass erfolgt dann ein erster Richtungswechsel der Strömungsrichtung S der Kühlungsluft K um etwa 90° in einem zweiten Umlenkungsbereich B2. In diesem zweiten Umlenkungsbereich B2 weisen sowohl die erste als auch die zweite Labyrinthdichtungswand 11, 12 einen gekrümmten, d.h. konvexen bzw. konkaven, Wandabschnitt auf, die eine strömungsoptimierte Umlenkung der Kühlungsluft K ermöglichen. Sowohl die erste als auch die zweite Labyrinthdichtungswand 11, 12 folgen in dem zweiten Umlenkungsbereich B2 einem Verlauf eines Viertelkreises. In einem dritten Umlenkungsbereich B3 weist lediglich die zweite Labyrinthdichtungswand 12 einen gekrümmt verlaufenden Wandabschnitt auf, der ebenfalls dem Verlauf eines Viertelkreises folgt. Schließlich weist die Dichtungsstrecke 13 einen vierten Umlenkungsbereich B4 auf. In diesem Bereich ist die erste Labyrinthdichtungswand 11 gerade ausgebildet und die zweite Labyrinthdichtungswand 12 bildet einen gekrümmten Wandabschnitt auf, der einem Verlauf eines Halbkreises folgt. Durch die spezifische Ausgestaltung des dritten und vierten Umlenkungsbereichs B3, B4 verändert sich die Strömungsrichtung S der Kühlungsluft K von den dem dritten Umlenkungsbereich B3 zu dem vierten Umlenkungsbereich B4 um etwa 45°. Mittels des vierten Umlenkungsbereichs B4 wird die Kühlungsluft dann nochmals um 90° umgelenkt, bevor die Kühlungsluft die Dichtungsstrecke 13 durch eine Auslassöffnung A verlässt.

Es ist ferner zu erkennen, dass die erste Labyrinthdichtungswand 11 und die zweite Labyrinthdichtungswand 12 entlang der Dichtungsstrecke im Bereich des ersten und zweiten Umlenkungsbereichs B im Wesentlichen parallel zueinander beabstandet angeordnet sind. Im Bereich des dritten und vierten Umlenkungsbereichs B3, B4 sind die erste Labyrinthdichtungswand 11 und die zweite Labyrinthdichtungswand 12 entlang der Dichtungsstrecke 13 im Wesentlichen nicht parallel zueinander beabstandet angeordnet.

Figur 6 zeigt einen Lufteinlass als Luftdurchgang 2 für einen Generator 1 mit einer rohrförmig ausgebildeten Labyrinthdichtungsvorrichtung 10, die sich zwischen einer Einlassöffnung E und einer Auslassöffnung A erstreckt. Durch den Lufteinlass wird für die Kühlung eines Generators 1 Kühlungsluft K aus der Umgebung U in den Generatorinnenraum geführt.

Die rohrförmig ausgebildete Labyrinthdichtungsvorrichtung 10 weist eine labyrinthartig ausgebildete Dichtungsstrecke 13 auf, die in einen ersten Abschnitt A1 und in einen von dem ersten Abschnitt A1 verschiedenen zweiten Abschnitt A2 aufgeteilt ist. In dem ersten Abschnitt A1 wird die Strömungsrichtung S der Kühlungsluft K um eine erste Umlenkungsachse R1 umgelenkt. In dem zweiten Abschnitt wird die Strömungsrichtung S der Kühlungsluft K um eine zweite Umlenkungsachse R2 umgelenkt, die von der ersten Umlenkungsachse R1 verschieden ist. Vorliegend ist die zweite Umlenkungsachse R2 gegenüber der ersten Umlenkungsachse R1 um etwa 90° gedreht ausgerichtet.

Die rohrförmig ausgebildete Labyrinthdichtungsvorrichtung 10 weist in dem ersten Abschnitt A1 drei Labyrinthdichtungswände auf, eine erste, eine zweite und eine dritte Labyrinthdichtungswand 11, 12, 14. Die drei Labyrinthdichtungswände 11, 12, 14 sind in diesem ersten Abschnitt A1 derart angeordnet, dass diese orthogonal zur Strömungsrichtung S eine labyrinthartige Dichtungsstrecke 13 mit einem quadratischen Querschnitt ausbilden. Die erste und zweite Labyrinthdichtungswand 11, 12 sind hierzu als Viertelkreissegment ausgebildet, die zueinander parallel beabstandet angeordnet sind. Die erste und zweite Labyrinthdichtungswand 11, 12 werden durch die dritte Labyrinthdichtungswand 14 miteinander verbunden, welche sich entlang der Dichtungsstrecke 13 einem Verlauf eines Viertelkreises folgenden erstreckt. Insofern definiert die rohrförmig ausgebildete Labyrinthdichtungsvorrichtung 10 eine Dichtungsstrecke 13, die in einem ersten Umlenkungsbereich B1 ausgehend von der Einlassöffnung E zunächst einen Richtungswechsel der Strömungsrichtung S der einströmenden Kühlungsluft K um die erste Umlenkungsachse R1 um etwa 90° bedingt.

Zur Strömungsoptimierung ist in dem ersten Abschnitt A1 eine Luftleitvorrichtung 20 innerhalb der Dichtungsstrecke 13 angeordnet. Die Luftleitvorrichtung 20 weist zwei Luftleitelemente 21 auf, die kreuzförmig angeordnet sind. Hierbei ist vorgesehen, dass sich ein Luftleitelement 21 innerhalb der Dichtungsstrecke 13 mittig zwischen und parallel zu der ersten und zweiten Labyrinthdichtungswand 11, 12 erstreckt. Das andere Luftleitelement 21 ist ebenfalls innerhalb der Dichtungsstrecke 13 parallel beabstandet zu der dritten Labyrinthdichtungswand 14 angeordnet.

In dem zweiten Abschnitt weist die rohrförmig ausgebildete Labyrinthdichtungsvorrichtung 10 zusätzliche eine vierte Labyrinthdichtungswand 15 auf. In dem zweiten Abschnitt A2 ist die erste Labyrinthdichtungswand 11 gegenüber der zweiten Labyrinthdichtungswand 12 geneigt angeordnet, so dass der rechteckförmige Querschnitt der Dichtungsstrecke 13 im zweiten Abschnitt A2, durch den die Kühlungsluft K strömt, in Richtung der Auslassöffnung A abnimmt. Insofern ist die Luftleitvorrichtung 20 in dem zweiten Abschnitt A2 an der ersten Labyrinthdichtungswand 11 als Luftleitelement 21 ausgebildet. Die dritte und vierte Labyrinthdichtungswand 15 sind dreiecksförmig ausgebildet und zueinander parallel beabstandet angeordnet. Durch diese Ausgestaltung wird die Strömungsrichtung S der Kühlungsluft K in dem zweiten Abschnitt A2 um die zweite Umlenkungsachse R2 um etwa 45° verändert.

### Bezugszeichenliste

- 1: Generator
- 2: Luftdurchgang
- 10: Labyrinthdichtungsvorrichtung
- 11: erste Labyrinthdichtungswand
- 12: zweite Labyrinthdichtungswand
- 13: labyrinthartig ausgebildete Dichtungsstrecke
- 14: dritte Labyrinthdichtungswand
- 15: vierte Labyrinthdichtungswand
- 20: Luftleitvorrichtung
- 21: Luftleitelement
- 22: Luftleiteinheit
- 100: Windenergieanlage
- A: Auslassöffnung
- A1, A2: Abschnitte der Dichtungsstrecke
- B, B1, B2, B3, B4: Umlenkungsbereiche
- E: Einlassöffnung
- K: Kühlungsluft
- R1: erste Umlenkungsachse
- R2: zweite Umlenkungsachse
- S: Strömungsrichtung
- U: Umgebung

## Patentansprüche

1. Labyrinthdichtungsvorrichtung (10) für einen Luftdurchgang (2) für Kühlungsluft (K) eines Kühlungssystems eines Generators (1) einer Windenergieanlage (100), die Labyrinthdichtungsvorrichtung (10) aufweisend,
- eine erste Labyrinthdichtungswand (11) und eine beabstandet zu der ersten Labyrinthdichtungswand angeordnete zweite Labyrinthdichtungswand, wobei
- die erste und die zweite Labyrinthdichtungswand (11, 12) eine labyrinthartig ausgebildete Dichtungsstrecke (13) ausbilden, die ausgebildet ist, den Generator (1) gegenüber Schmutz und/oder Wasser aus einer Umgebung (U) abzudichten und zur Kühlung des Generators (1) die Umgebung (U) des Generators (1) mit einem Generatorinnenraum des Generators (1) strömungstechnisch zu verbinden, wobei
- die Dichtungsstrecke (13) eine Luftleitvorrichtung (20) aufweist, die ausgebildet ist, die Kühlungsluft (K) strömungsoptimiert durch die Dichtungsstrecke (13) zu leiten,
**dadurch gekennzeichnet, dass**
- die Luftleitvorrichtung (20) innerhalb der Dichtungsstrecke (13), beabstandet zu der ersten und zweiten Labyrinthdichtungswand (11, 12) angeordnet ist.

2. Labyrinthdichtungsvorrichtung (10) nach dem vorhergehenden Anspruch, wobei die Luftleitvorrichtung (20)
- an der ersten und/oder zweiten Labyrinthdichtungswand (11, 12) ausgebildet ist.

3. Labyrinthdichtungsvorrichtung (10) nach dem vorhergehenden Anspruch, wobei die Luftleitvorrichtung (20) mindestens ein Luftleitelement (21) aufweist.

4. Labyrinthdichtungsvorrichtung (10) nach dem vorhergehenden Anspruch, wobei die Luftleitvorrichtung (20) mindestens zwei Luftleitelemente (21) aufweist, wobei die mindestens zwei Luftleitelemente (21) in Strömungsrichtung (S) der Kühlungsluft (K) hintereinander und/oder nebeneinander angeordnet sind.

5. Labyrinthdichtungsvorrichtung (10) nach einem der vorhergehenden Ansprüche 3 oder 4, wobei das mindestens eine Luftleitelement (21) gekrümmt ausgebildet ist und/oder das mindestens eine Luftleitelement (21) gegenüber der Strömungsrichtung (S) geneigt, insbesondere winklig angeordnet ist.

6. Labyrinthdichtungsvorrichtung (10) nach einem der vorhergehenden Ansprüche 3 bis 5, wobei das mindestens eine Luftleitelement (21) als Teilringsegment ausgebildet ist, das sich vorzugsweise um etwa 90° oder 180° erstreckt, und/oder als ebenes Element ausgebildet ist.

7. Labyrinthdichtungsvorrichtung (10) nach einem der vorhergehenden Ansprüche, wobei die labyrinthartige Dichtungsstrecke (13) mindestens einen Umlenkungsbereich (B1, B2, B3, B4) aufweist, der ausgebildet ist, die Kühlungsluft (K) derart zu führen, dass der mindestens eine Umlenkungsbereich (B1, B2, B3, B4) eine Änderung der Strömungsrichtung (S) der Kühlungsluft (K) bedingt.

8. Labyrinthdichtungsvorrichtung (10) nach dem vorhergehenden Anspruch, wobei mindestens zwei Umlenkungsbereiche (B) ausgebildet sind, eine Änderung der Strömungsrichtung (S) von mindestens 90°, vorzugsweise von mindestens 180° zu bewirken, wobei die mindestens zwei Umlenkungsbereiche (B) in Strömungsrichtung (S) in Reihe angeordnet sind.

9. Labyrinthdichtungsvorrichtung (10) nach einem der vorhergehenden Ansprüche, wobei in einem Umlenkungsbereich (B) angeordnete Luftleitelemente (21), insbesondere mindestens zwei orthogonal zur Strömungsrichtung (S) nebeneinander angeordnete Luftleitelemente (21) und/oder mindestens zwei in Strömungsrichtung (S) hintereinander angeordnete Luftleitelemente (21) eine Luftleiteinheit (22) ausbilden.

10. Labyrinthdichtungsvorrichtung (10) nach dem vorhergehenden Anspruch, wobei in mindestens einem oder in allen Umlenkungsbereichen (B) mindestens ein Leitelement und/oder eine Luftleiteinheit (22) angeordnet sind/ist.

11. **Labyrinthdichtungsvorrichtung** (10) nach einem der vorhergehenden Ansprüche, wobei
- die erste Labyrinthdichtungswand (11) und die zweite Labyrinthdichtungswand (12) in Bezug zueinander stationär angeordnet sind, oder
- die erste Labyrinthdichtungswand (11) und die zweite Labyrinthdichtungswand (12) in Bezug zueinander beweglich angeordnet sind, wobei
∘ die erste Labyrinthdichtungswand (11) stationär und die zweite Labyrinthdichtungswand (12) beweglich angeordnet sind, oder
∘ die erste Labyrinthdichtungswand (11) beweglich und die zweite Labyrinthdichtungswand (12) stationär angeordnet sind, oder
∘ die erste Labyrinthdichtungswand (11) beweglich und die zweite Labyrinthdichtungswand (12) beweglich angeordnet sind.

12. Labyrinthdichtungsvorrichtung (10) nach einem der vorhergehenden Ansprüche, wobei
- die erste Labyrinthdichtungswand (11) von einem Generatorgehäuse und/oder Gondelgehäuse und/oder Maschinengehäuse und/oder einem Spinner ausgebildet wird, und/oder
- die zweite Labyrinthdichtungswand (12) von einem Generatorgehäuse und/oder Gondelgehäuse und/oder Maschinengehäuse und/oder einem Spinner ausgebildet wird, und/oder
- die Dichtungsstrecke (13) eine konstante Querschnittsfläche aufweist, wobei sich die Querschnittsfläche der Dichtungsstrecke (13) vorzugsweise in Strömungsrichtung (S) nicht verändert, insbesondere nicht zunimmt und/oder nicht abnimmt.

13. Luftdurchgang (2) aufweisend eine Labyrinthdichtungsvorrichtung (10) nach einem der vorhergehenden Ansprüche 1-12.

14. Generator (1) aufweisend eine Labyrinthdichtungsvorrichtung (10) nach einem der vorhergehenden Ansprüche 1-12 und/oder einen Luftdurchgang (2) nach dem vorhergehenden Anspruch 13.

15. Windenergieanlage (100) aufweisend eine Labyrinthdichtungsvorrichtung (10) nach einem der vorhergehenden Ansprüche 1-12 und/oder einen Luftdurchgang (2) nach dem vorhergehenden Anspruch 13 und/oder einen Generator (1) nach dem vorhergehenden Anspruch 14.

16. Verwendung einer Labyrinthdichtungsvorrichtung (10) nach einem der vorhergehenden Ansprüche 1-12 zur strömungsoptimierten Abdichtung eines Luftdurchgangs (2) für Kühlungsluft (K) eines Kühlungssystems für einen Generator (1) einer Windenergieanlage (100).

## Claims

1. A labyrinth seal device (10) for an air passage (2) for cooling air (K) of a cooling system of a generator (1) of a wind power installation (100), the labyrinth seal device (10) having
- a first labyrinth seal wall (11) and a second labyrinth seal wall arranged spaced apart from the first labyrinth seal wall, wherein
- the first and second labyrinth seal walls (11, 12) form a labyrinthine sealing section (13) which is configured to seal the generator (1) with respect to dirt and/or water from a surrounding area (U) and to fluidically connect the surrounding area (U) of the generator (1) with a generator interior of the generator (1) in order to cool the generator (1), wherein
- the sealing section (13) has an air directing device (20) which is configured to direct the cooling air (K) in a flow-optimized manner through the sealing section (13)
**characterized in that**
- the air directing device (20) is arranged within the sealing section (13), spaced apart from the first and second labyrinth seal wall (11, 12).

2. The labyrinth seal device (10) as claimed in the preceding claim, wherein the air directing device (20)
- is formed on the first and/or second labyrinth seal wall (11, 12).

3. The labyrinth seal device (10) as claimed in the preceding claim, wherein the air directing device (20) has at least one air directing element (21).

4. The labyrinth seal device (10) as claimed in the preceding claim, wherein the air directing device (20) has at least two air directing elements (21), wherein the at least two air directing elements (21) are arranged one behind the other and/or side by side in the flow direction (S) of the cooling air (K).

5. The labyrinth seal device (10) as claimed in one of the preceding claims 3 or 4, wherein the at least one air directing element (21) is curved and/or the at least one air directing element (21) is inclined, in particular arranged at an angle, relative to the flow direction (S).

6. The labyrinth seal device (10) as claimed in one of the preceding claims 3 to 5, wherein the at least one air directing element (21) is in the form of a part-ring segment which extends preferably through about 90° or 180°, and/or is in the form of a planar element.

7. The labyrinth seal device (10) as claimed in one of the preceding claims, wherein the labyrinthine sealing section (13) has at least one deflection region (B1, B2, B3, B4) which is configured to guide the cooling air (K) such that the at least one deflection region (B1, B2, B3, B4) causes a change in the flow direction (S) of the cooling air (K).

8. The labyrinth sealing device (10) as claimed in the preceding claim, wherein at least two deflection regions (B) are configured to bring about a change in the flow direction (S) of at least 90°, preferably of at least 180°, wherein the at least two deflection regions (B) are arranged in series in the flow direction (S).

9. The labyrinth seal device (10) as claimed in one of the preceding claims, wherein air directing elements (21) arranged in a deflection region (B), in particular at least two air directing elements (21) arranged side by side orthogonal to the flow direction (S) and/or at least two air directing elements (21) arranged one behind the other in the flow direction (S), form an air directing unit (22).

10. The labyrinth seal device (10) as claimed in the preceding claim, wherein at least one directing element and/or an air directing unit (22) are/is arranged in at least one or in all of the deflection regions (B).

11. The labyrinth seal device (10) as claimed in one of the preceding claims, wherein
- the first labyrinth seal wall (11) and the second labyrinth seal wall (12) are arranged stationarily with respect to one another, or
- the first labyrinth seal wall (11) and the second labyrinth seal wall (12) are arranged movably with respect to one another, wherein
∘ the first labyrinth seal wall (11) is arranged stationarily and the second labyrinth seal wall (12) is arranged movably, or
∘ the first labyrinth seal wall (11) is arranged movably and the second labyrinth seal wall (12) is arranged stationarily, or
∘ the first labyrinth seal wall (11) is arranged movably and the second labyrinth seal wall (12) is arranged movably.

12. The labyrinth seal device (10) as claimed in one of the preceding claims, wherein
- the first labyrinth seal wall (11) is formed by a generator housing and/or gondola housing and/or machine housing and/or a spinner, and/or
- the second labyrinth seal wall (12) is formed by a generator housing and/or gondola housing and/or machine housing and/or a spinner, and/or
- the sealing section (13) has a constant cross-sectional area, wherein the cross-sectional area of the sealing section (13) preferably does not change, in particular does not increase and/or does not decrease, in the flow direction (S).

13. An air passage (2) having a labyrinth seal device (10) as claimed in one of the preceding claims 1-12.

14. A generator (1) having a labyrinth seal device (10) as claimed in one of the preceding claims 1-12 and/or an air passage (2) as claimed in the preceding claim 13.

15. A wind power installation (100) having a labyrinth seal device (10) as claimed in one of the preceding claims 1-12 and/or an air passage (2) as claimed in the preceding claim 13 and/or a generator (1) as claimed in the preceding claim 14.

16. The use of a labyrinth seal device (10) as claimed in one of the preceding claims 1-12 for the flow-optimized sealing of an air passage (2) for cooling air (K) of a cooling system for a generator (1) of a wind power installation (100).

## Revendications

1. Dispositif à garniture à labyrinthe (10) pour un passage d'air (2) pour de l'air de refroidissement (K) d'un système de refroidissement d'un générateur (1) d'une éolienne (100), ledit dispositif à garniture à labyrinthe (10) présentant
- une première paroi de garniture à labyrinthe (11) et une deuxième paroi de garniture à labyrinthe disposée de manière espacée par rapport à la première paroi de garniture à labyrinthe, dans lequel
- la première et la deuxième paroi de garniture à labyrinthe (11, 12) réalisent un tronçon d'étanchéité (13) réalisé de type à labyrinthe, qui est réalisé pour étanchéifier le générateur (1) contre la saleté et/ou l'eau provenant d'un environnement (U) et pour relier en communication fluidique l'environnement (U) du générateur (1) à un espace intérieur de générateur du générateur (1) pour le refroidissement du générateur (1), dans lequel
- le tronçon d'étanchéité (13) présente un dispositif d'acheminement d'air (20), qui est réalisé pour acheminer l'air de refroidissement (K) avec un écoulement optimisé à travers le tronçon d'étanchéité (13),
**caractérisé en ce que**
- le dispositif d'acheminement d'air (20) est disposé à l'intérieur du tronçon d'étanchéité (13), de manière espacée par rapport à la première et à la deuxième paroi de garniture à labyrinthe (11, 12).

2. Dispositif à garniture à labyrinthe (10) selon la revendication précédente, dans lequel le dispositif d'acheminement de l'air (20)
- est réalisé sur la première et/ou la deuxième paroi de garniture à labyrinthe (11, 12).

3. Dispositif à garniture à labyrinthe (10) selon la revendication précédente, dans lequel le dispositif d'acheminement d'air (20) présente au moins un élément d'acheminement d'air (21).

4. Dispositif à garniture à labyrinthe (10) selon la revendication précédente, dans lequel le dispositif d'acheminement d'air (20) présente au moins deux éléments d'acheminement d'air (21), dans lequel les au moins deux éléments d'acheminement de l'air (21) sont disposés dans la direction d'écoulement (S) de l'air de refroidissement (K) l'un après l'autre et/ou côte à côte.

5. Dispositif à garniture à labyrinthe (10) selon l'une quelconque des revendications précédentes 3 ou 4, dans lequel l'au moins un élément d'acheminement d'air (21) est réalisé de manière incurvée et/ou
l'au moins un élément d'acheminement d'air (21) est disposé de manière inclinée, en particulier selon un angle, par rapport à la direction d'écoulement (S).

6. Dispositif à garniture à labyrinthe (10) selon l'une quelconque des revendications 3 à 5, dans lequel l'au moins un élément d'acheminement d'air (21) est réalisé en tant que segment annulaire partiel, qui s'étend de préférence à environ 90° ou 180° et/ou est réalisé en tant qu'élément plan.

7. Dispositif à garniture à labyrinthe (10) selon l'une quelconque des revendications précédentes, dans lequel le tronçon d'étanchéité (13) de type à labyrinthe présente au moins une zone de renvoi (B1, B2, B3, B4), qui est réalisée pour guider l'air de refroidissement (K) de telle manière que l'au moins une zone de renvoi (B1, B2, B3, B4) implique une modification de la direction d'écoulement (S) de l'air de refroidissement (K).

8. Dispositif à garniture à labyrinthe (10) selon la revendication précédente, dans lequel au moins deux zones de renvoi (B) sont réalisées pour entraîner une modification de la direction d'écoulement (S) d'au moins 90°, de préférence d'au moins 180°, dans lequel les au moins deux zones de renvoi (B) sont disposées en rangée dans la direction d'écoulement (S).

9. Dispositif à garniture à labyrinthe (10) selon l'une quelconque des revendications précédentes, dans lequel des éléments d'acheminement d'air (21) disposés dans une zone de renvoi (B), en particulier au moins deux éléments d'acheminement d'air (21) disposés côte à côte de manière orthogonale par rapport à la direction d'écoulement (S) et/ou au moins deux éléments d'acheminement d'air (21) disposés l'un derrière l'autre dans la direction d'écoulement (S) réalisent une unité d'acheminement d'air (22).

10. Dispositif à garniture à labyrinthe (10) selon la revendication précédente, dans lequel au moins un élément d'acheminement et/ou une unité d'acheminement d'air (22) est disposé(e)/sont disposés dans au moins une ou toutes les zones de renvoi (B).

11. Dispositif à garniture à labyrinthe (10) selon l'une quelconque des revendications précédentes, dans lequel
- la première paroi de garniture à labyrinthe (11) et la deuxième paroi de garniture à labyrinthe (12) sont disposées de manière stationnaire l'une par rapport à l'autre, ou
- la première paroi de garniture de labyrinthe (11) et la deuxième paroi de garniture de labyrinthe (12) sont disposées de manière mobile l'une par rapport à l'autre, dans lequel
-- la première paroi de garniture à labyrinthe (11) est disposée de manière stationnaire et la deuxième paroi de garniture à labyrinthe (12) est disposée de manière mobile, ou
-- la première paroi de garniture à labyrinthe (11) est disposée de manière mobile et la deuxième paroi de garniture à labyrinthe (12) est disposée de manière stationnaire, ou
-- la première paroi de garniture à labyrinthe (11) est disposée de manière mobile et la deuxième paroi de garniture à labyrinthe (12) est disposée de manière mobile.

12. Dispositif à garniture à labyrinthe (10) selon l'une quelconque des revendications précédentes, dans lequel
- la première paroi de garniture à labyrinthe (11) est réalisée par un boîtier de générateur et/ou un boîtier de nacelle et/ou un boîtier de machine et/ou une centrifugeuse, et/ou
- la deuxième paroi de garniture à labyrinthe (12) est réalisée par un boîtier de générateur et/ou un boîtier de nacelle et/ou un boîtier de machine et/ou une centrifugeuse, et/ou
- le tronçon d'étanchéité (13) présente une surface de section transversale constante, dans lequel la surface de section transversale du tronçon d'étanchéité (13) ne varie pas de préférence dans la direction d'écoulement (S), en particulier n'augmente pas et/ou ne diminue pas.

13. Passage d'air (2) présentant un dispositif à garniture à labyrinthe (10) selon l'une quelconque des revendications 1 - 12.

14. Générateur (1) présentant un dispositif à garniture à labyrinthe (10) selon l'une quelconque des revendications précédentes 1 - 12 et/ou un passage d'air (2) selon la revendication précédente 13.

15. Eolienne (100) présentant un dispositif à garniture à labyrinthe (10) selon l'une quelconque des revendications précédentes 1 - 12 et/ou un passage d'air (2) selon la revendication précédente 13 et/ou un générateur (1) selon la revendication précédente 14.

16. Utilisation d'un dispositif à garniture à labyrinthe (10) selon l'une quelconque des revendications précédentes 1 - 12 pour étanchéifier, avec un écoulement optimisé, un passage d'air (2) pour de l'air de refroidissement (K) d'un système de refroidissement pour un générateur (1) d'une éolienne (100).
